# EUROPÄISCHE PATENTSCHRIFT

(11) **EP 3 112 736 B1**
(45) Veröffentlichungstag und Bekanntmachung des Hinweises auf die Patenterteilung: **31.10.2018**
(21) Anmeldenummer: 16176554.0
(22) Anmeldetag: 28.06.2016
(51) Int. Cl.: F16L 19/06, F16L 19/08

(54) **ZUGSICHERUNG**
PULL-OUT PROTECTION
BLOCAGE EN TRACTION

(30) Priorität: 30.06.2015 AT 505662015
(43) Veröffentlichungstag der Anmeldung: 04.01.2017
(73) Patentinhaber: E. Hawle Armaturenwerke GmbH, 4840 Vöcklabruck (AT)
(72) Erfinder: Stiegler, Andreas, 4693 Desselbrunn (AT); Jodlbauer, Johann, 4844 Regau (AT)
(74) Vertreter: Puchberger & Partner Patentanwälte

(56) Entgegenhaltungen:
- WO-A1-2009/060462
- WO-A1-2010/080743
- DE-A1- 3 025 292
- DE-A1-102006 043 454
- DE-T2- 69 928 943
- US-A- 3 815 940

## Beschreibung

Die Erfindung betrifft eine Vorrichtung zur Sicherung eines, in einer Rohrarmatur angeordneten Rohres gegen die Einwirkung axialer Kräfte, umfassend einen einteiligen oder mehrteiligen, vorzugsweise unterbrochenen und in seinem Umfang durch ein Spannelement, beispielsweise eine Muffe, zusammendrückbaren Klemmring.

Derartige Vorrichtungen sind aus dem Stand der Technik als Zugsicherungen bekannt, die bei Zubehörteilen wie Armaturen, Fittingen oder Verbindungsstücken verwendet werden, um einer axialen Belastung des Rohres entgegenzuwirken. Zugsicherungen aus dem Stand der Technik umfassen in der Regel eine Einschuböffnung zum Einführen des Rohres, eine sich ausgehend von der Einschuböffnung des Rohres zumindest partiell konisch erweiternde Außenfläche, sowie am inneren Umfang angeordneten Rückhalteelemente, insbesondere Zähne oder dergleichen, zum Eingriff in die äußere Oberfläche des Rohres.

Entsprechende Zugsicherungen sind aus den Druckschriften DE 30 25 292 A1, US 3 815 940 A, DE 699 28 943 T2, WO 2009/060 462 A1,sowie WO 2010/080743 A1 bekannt. Die DE 30 25 292 A1 zeigt eine Zugsicherung mit einem Klemmring, der einen schwalbenschwanzförmigen Funktionssteg aufweist.

Die Zugsicherung wirkt an ihrer äußeren, konischen Oberfläche mit einer entsprechend geformten Betätigungsfläche des umgebenden Spannelements zusammen und wird beim Befestigen durch das Spannelement zusammengedrückt, sodass die Rückhalteelemente in die Außenfläche des Rohres eingreifen, dieses fixieren und somit einem axialen Ausziehen der Rohrleitung durch externe Zugbelastung entgegenwirken.

Ein Problem derartiger gattungsgemäßer Zugsicherungen besteht darin, dass durch die partiell konische Außenfläche der Zugsicherung beim Befestigen des Spannelements ungleichmäßige Kräfte auf die Rückhalteelemente wirken, und diese somit ungleichmäßig tief in die Außenfläche des Rohres eindringen. Es hat sich insbesondere gezeigt, dass bei der Montage des Spannelements die außenliegenden Rückhalteelemente, die im Bereich der beiden Öffnungen der Zugsicherung vorgesehen sind, tiefer in die Außenfläche des Rohres eindringen, als die innenliegenden Rückhalteelemente. Dies führt zu unnötiger Beschädigung und Belastung des Rohres und darüber hinaus zu Problemen bei der Demontage.

Zur Lösung dieses und anderer Probleme wird erfindungsgemäß eine Vorrichtung gemäß Anspruch 1 vorgeschlagen.

Abhängig von Form und Größe des Klemmrings und dem Anwendungsgebiet kann die Höhe der Rückhalteelemente erfindungsgemäß derart gewählt werden, dass für eine vorgesehene axiale Zugbelastung nur eine bestimmte maximale Beeinträchtigung der Außenfläche des Rohres erreicht wird.

Erfindungsgemäß kann vorgesehen sein, dass entlang einer Axialrichtung des Klemmrings die außenliegenden Rückhalteelemente eine geringere Erstreckung in Richtung des Mittelpunkts des Klemmrings aufweisen als die innenliegenden Rückhalteelemente. Diese Ausführung hat insbesondere dann Vorteile, wenn die Außenfläche des Klemmrings konisch verläuft, da in diesem Fall die Belastung auf das Rohr besser verteilt wird. Insbesondere kann vorgesehen sein, dass jenes Rückhalteelement, welches an der der Einschuböffnung gegenüberliegenden Öffnung des Klemmrings vorgesehen ist, die geringste Höhe aufweist.

Erfindungsgemäß kann auch vorgesehen sein, dass entlang einer Axialrichtung des Klemmrings die mittig liegenden Rückhalteelemente eine geringere Erstreckung in Richtung des Mittelpunkts des Klemmrings aufweisen als die außenliegenden Rückhalteelemente.

Erfindungsgemäß kann auch ein bestimmter Verlauf der Spitzen der Rückhalteelemente vorgesehen sein. Insbesondere kann vorgesehen sein, dass in einem Schnitt des Klemmrings entlang einer Schnittebene die Spitzen der Rückhalteelemente eine in Richtung des Mittelpunkts des Klemmrings konvex gekrümmte Eingriffskurve bilden. Ebenso kann erfindungsgemäß vorgesehen sein, dass in einem Schnitt des Klemmrings entlang einer Schnittebene die Spitzen der Rückhalteelemente eine in Richtung des Mittelpunkts des Klemmrings konkav gekrümmte Eingriffskurve bilden. Erfindungsgemäß ist insbesondere vorgesehen, dass die Rückhalteelemente Zähne mit tangential verlaufender Schneide umfassen. Die Zähne können einen dreieckigen, trapezförmigen, oder halbrunden Querschnitt oder Kombinationen daraus aufweisen.

Es kann weiters vorgesehen sein, dass die Rückhalteelemente zumindest eine im Wesentlichen radial umlaufende Zahnrille umfassen. Diese zumindest eine radial umlaufende Zahnrille kann an einer oder mehreren Zahnkreisen, aber vorzugsweise im Bereich gegenüber der Einschuböffnung des Klemmrings angeordnet sein. Auch eine Kombination von Zähnen und Zahnrillen kann erfindungsgemäß vorgesehen sein. Erfindungsgemäß kann weiters vorgesehen sein, dass die Rückhalteelemente, also Zähne oder dergleichen, tangential versetzt angeordnet sind.

Insbesondere kann erfindungsgemäß vorgesehen sein, dass die Zähne in mehreren axial versetzten Zahnkreisen, vorzugsweise in Kombination mit zumindest einer im Wesentlichen umlaufenden Zahnrille, angeordnet sind. Die Zahnrille kann sich mit einem der Zahnkreise decken. Die erfindungsgemäßen Zahnkreise können zueinander tangential versetzt angeordnet sein. Weiters kann erfindungsgemäß vorgesehen sein, dass der erste Zahn im Bereich der Einschuböffnung des Klemmrings eine Einführrundung oder Fase aufweist, um ein Einführen des Rohres zu erleichtern.

Die konkrete Ausführung der Rückhalteelemente kann vorzugsweise an das jeweilige Anwendungsgebiet, also Form, Größe und Material des Rohres und der Zugsicherung, angepasst sein.

Erfindungsgemäß kann vorgesehen sein, dass die Rückhalteelemente, vorzugsweise die Zähne an zumindest einer Basis eine Verstärkung, beispielsweise eine Materialverstärkung aufweisen. Dadurch wird die mechanische Stabilität der Rückhalteelemente erhöht.

Der Klemmring kann erfindungsgemäß mehrteilig ausgeführt sein und einen außenliegenden Trägerring aus Kunststoff sowie zumindest einen innenliegenden, mit Rückhalteelementen, vorzugsweise Zahnrillen, versehenen Schneideinsatz aus Metall umfassen. Der Schneideinsatz kann insbesondere mehrteilig ausgeführt sein und zumindest einen Metalleinsatz mit Zähnen umfassen.

Erfindungsgemäß kann vorgesehen sein, dass der Klemmring einen Stauchraum aufweist, der sich ausgehend von der Einschuböffnung erweiternd, insbesondere zumindest partiell keilförmig auseinanderlaufend, ausgeführt ist. Der Stauchraum kann aber auch einen rechteckigen, abgestuften oder abgerundeten Querschnitt aufweisen.

Erfindungsgemäß kann vorgesehen sein, dass am Klemmring an der Außenfläche zumindest ein nach außen abstehendes Federelement, insbesondere zumindest eine Federlasche, vorgesehen ist. Insbesondere können mehrere, vorzugsweise vier um 90 Grad versetzte Federelemente vorgesehen sein.

Die Federelemente können vorzugsweise derart ausgeführt sein, dass sie im montierten Zustand gegen die Innenfläche des Spannelements drücken und somit die Symmetrieachse des Klemmrings im Wesentlichen koinzident zur Symmetrieachse des Spannelements ausrichten.

Erfindungsgemäß ist vorgesehen, dass der Klemmring einen radial umlaufenden und konischen Funktionssteg, beispielsweise einen Materialsteg mit schwalbenschwanzförmigem Querschnitt, aufweist, der als Anschlag dient und die Eingriffstiefe der Rückhalteelemente in das Rohr über eine Verbindung mit einem Druckelement, beispielsweise einer Druckhülse, begrenzt.

Die Außenfläche des Klemmrings kann eine in Bezug auf den Mittelpunkt des Klemmrings konkave Form, also eine Bombierung, aufweisen. Dadurch kann die Stabilität des Klemmrings erhöht werden. Die Außenfläche des Klemmrings kann aber auch eine in Bezug auf den Mittelpunkt des Klemmrings konvexe, also taillierte, Form aufweisen. Dadurch kann die Stabilität des Klemmrings gezielt im Bereich seiner beiden Öffnungen erhöht werden. Die konkave oder konvexe Form der Außenfläche kann vorzugsweise mit einer entsprechend konkav oder konvex ausgeführten Eingriffskurve der Rückhalteelemente kombiniert werden.

Weitere erfindungsgemäße Merkmale ergeben sich aus den Patentansprüchen, der Beschreibung der Ausführungsbeispiele und den Zeichnungen. Die Erfindung wird im Folgenden an Hand einiger nicht ausschließlicher Ausführungsbeispiele näher erläutert.

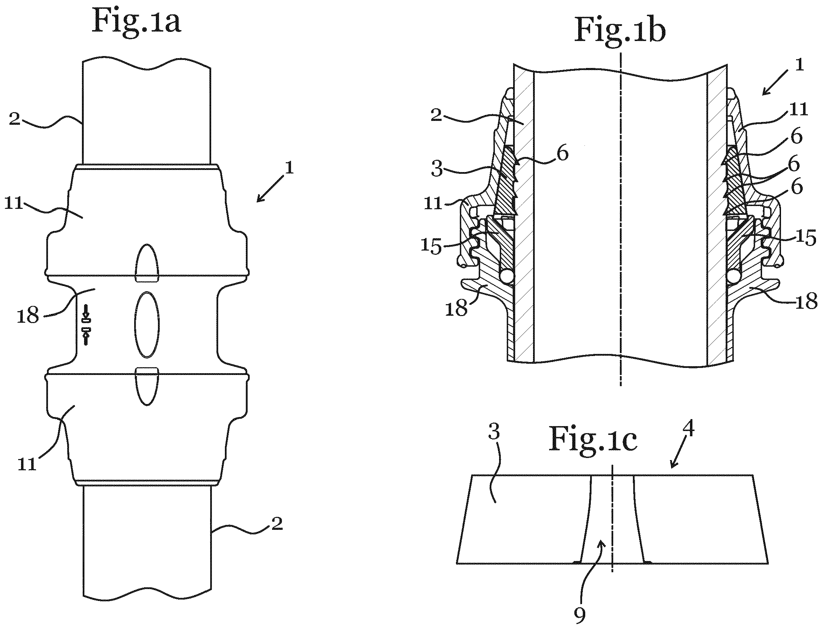

Fig. 1a zeigt eine Rohrarmatur 1, die zwischen den Endstücken von Rohren 2 angeordnet ist und die Rohre 2 zugfest miteinander verbindet. Zu diesem Zweck sind die Rohre 2 in bekannter Weise in ein Gehäuse 18 eingesteckt und mit zwei Spannelementen 11 fixiert.

Fig. 1b zeigt einen Querschnitt durch die Rohrarmatur 1 aus Fig. 1a. Das Rohr 2 ist in das Gehäuse 18 eingesteckt und durch einen Klemmring 3 gegen axiale Belastungen gesichert. Der Klemmring 3 hat eine konische Außenfläche, die mit einer Innenfläche des Spannelements 11 zusammenwirkt, sodass bei der Befestigung des Spannelements 11 der Klemmring 3 gegen die Außenfläche des Rohres 2 gedrückt wird. Es ist weiters ein Druckelement 15 vorgesehen, welches die axiale Bewegung des Klemmrings 3 begrenzt und einen Anschlag bildet.

Der Klemmring 3 verfügt an seinem inneren Umfang über Rückhalteelemente 6, die sich bei Montage in die Außenfläche des Rohres 2 drücken und somit einer axialen Belastung, insbesondere einer Zugbelastung, wirksam entgegenwirken. Es können unterschiedliche Ausführungsformen der Rückhalteelemente 6 vorgesehen sein, insbesondere Zähne mit unterschiedlichen Höhen oder Zahnrillen.

Fig. 1c zeigt eine Seitenansicht eines erfindungsgemäßen Klemmrings 3. Dieser ist als unterbrochener und zusammendrückbarer Ring ausgeführt, wobei die Unterbrechung durch einen Stauchraum 9 gebildet ist. Der Stauchraum 9 ist, ausgehend von der Einschuböffnung 4 des Rohres 2, annähernd keilförmig verbreiternd ausgeführt.

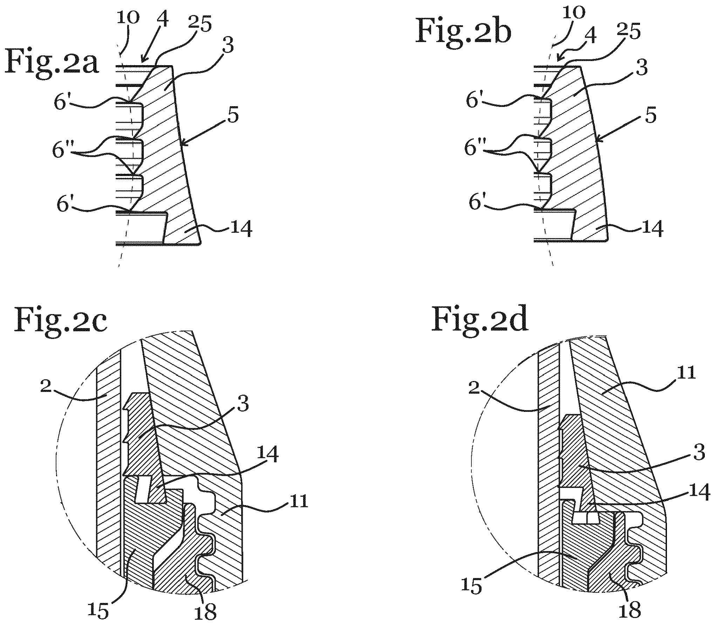

Fig. 2a und 2b zeigen einen detaillierten Querschnitt durch zwei erfindungsgemäße Ausführungsformen des Klemmrings 3, bei denen die Höhe der Rückhalteelemente 6 in Radialrichtung des Klemmrings 3 unterschiedlich ist. In beiden Ausführungsbeispielen umfasst der Klemmring 3 eine Einschuböffnung 4 zur Aufnahme des Rohres 2 und eine Außenfläche 5, die sich ausgehend von der Einschuböffnung 4 in konischer Form erweitert. Es sind außenliegende Rückhalteelemente 6' im Bereich der Öffnungen des Klemmrings 3 sowie innenliegende Rückhalteelemente 6" vorgesehen.

In Fig. 2a haben die beiden außenliegenden Rückhalteelemente 6' in Radialrichtung eine größere Erstreckung als die beiden innenliegenden Rückhalteelemente 6", sodass die Spitzen der Rückhalteelemente 6', 6" eine in Richtung des Mittelpunkts des Klemmrings 3 konkav gekrümmte Eingriffskurve 10 bilden. Die Außenfläche des Klemmrings 3 ist hingegen in Richtung des Mittelpunkts des Klemmrings 3 konvex gekrümmt, weist also eine Bombierung nach innen auf.

In Fig. 2b haben die beiden außenliegenden Rückhalteelemente 6' eine geringere Erstreckung als die beiden innenliegenden Rückhalteelemente 6", sodass die Spitzen der Rückhalteelemente 6', 6" eine in Richtung des Mittelpunkts des Klemmrings 3 konvex gekrümmte Eingriffskurve 10 bilden. Die Außenfläche 5 des Klemmrings 3 ist hingegen in Richtung des Mittelpunkts des Klemmrings 3 konkav gekrümmt, weist also eine Bombierung nach außen auf. Jenes Rückhalteelement 6', welches im Bereich der Einschuböffnung 4 vorgesehen ist, weist eine Einführrundung 25 oder Fase auf, um das Einschieben des Rohres 2 zu erleichtern.

Weiters verfügt der Klemmring gemäß Fig. 2a und Fig. 2b an seiner, der Einschuböffnung 4 gegenüberliegenden Seite über einen umlaufenden Funktionssteg 14 zur Interaktion mit anderen Elementen, insbesondere dem in Fig. 1b dargestellten Druckelement 15. In den Ausführungsbeispielen gemäß Fig. 2a und 2b weist der Funktionssteg 14 einen schwalbenschwanzförmigen Querschnitt auf.

Fig. 2c und 2d zeigen ein Detail einer erfindungsgemäßen Rohrarmatur mit einem Gehäuse und einem daran angeschraubten Spannelemente 11 sowie einem eingeschobenen Rohr 2. Es ist ein Klemmring 3 vorgesehen, dessen schwalbenschwanzförmiger Funktionssteg 14 in eine entsprechend ausgeformte Nut eines Druckelements 15 eingreift. Fig. 2c zeigt den geöffneten, und Fig. 2d den geschlossenen Zustand. Der Funktionssteg 14 dient in diesem Ausführungsbeispiel dazu, die radiale und axiale Verschiebung des Klemmrings 3 zu begrenzen. Der Klemmring 3 kann durch die Lagerung des Funktionsstegs 14 in der umlaufenden Nut des Druckelements 15 weder in radialer Richtung zu tief in das Rohr 2 eindringen, noch sich in axialer Richtung zu weit nach unten verschieben. Der Bewegungsspielraum des Klemmrings wird also durch das Zusammenspiel des Funktionsstegs 14 mit dem Druckelement 15 auf einen vorab definierten Bereich begrenzt.

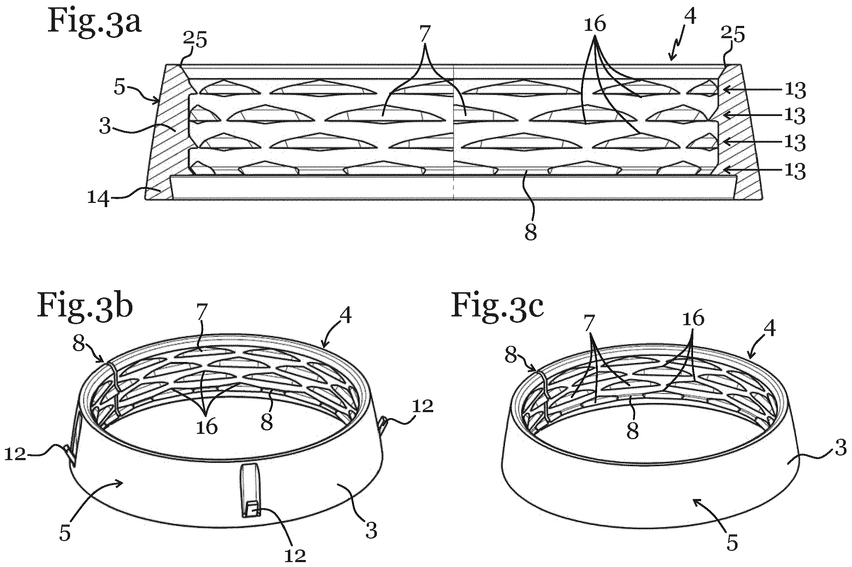

Fig. 3a bis 3c zeigen Ansichten weiterer erfindungsgemäßer Ausführungsformen. Der Klemmring 3 ist als gebrochener, zusammendrückbarer Ring mit einer Einschuböffnung 4 und einem Stauchraum 9 mit rechteckigem Querschnitt ausgeführt. Die Außenfläche 5 verbreitert sich ausgehend von der Einschuböffnung 4. Am inneren Umfang sind Rückhalteelemente in Form von Zähnen 7 mit tangential verlaufender Schneide vorgesehen.

Die Zähne 7 sind in mehreren, axial zueinander versetzten Zahnkreisen 13 angeordnet, wobei die Zähne 7 benachbarter Zahnkreise 13 tangential zueinander versetzt sind. Im Bereich gegenüber der Einschuböffnung 4 ist eine umlaufende Zahnrille 8 vorgesehen. Diese umlaufende Zahnrille 8 kann an einem oder mehreren Zahnkreisen, aber vorzugsweise an dem Zahnkreis gegenüber der Einschuböffnung 4 vorgesehen sein.

Im vorliegenden Ausführungsbeispiel deckt sich die Zahnrille 8 mit einem der Zahnkreise 13. Außerdem verfügen die Zähne 7 an ihrer Basis 16 über eine Materialverstärkung. In Fig. 3a ist auch gezeigt, dass der Klemmring 3 an seiner der Einschuböffnung 4 entgegengesetzten Öffnung über einen schwalbenschwanzförmigen Funktionssteg 14 verfügt.

In dem Ausführungsbeispiel gemäß Fig. 3b sind an der Außenfläche 5 des Klemmrings 3 nach außen abstehende Federelemente 12 in Form federnder Laschen angeordnet. Es sind vier um jeweils 90° versetzte Federlaschen vorgesehen. Die Federelemente 12 sind derart ausgeführt, dass sie im montierten Zustand gegen die Innenfläche des Spannelements 11 drücken und somit die Symmetrieachse des Klemmrings 3 im Wesentlichen koinzident zur Symmetrieachse des Spannelements 11 ausrichten.

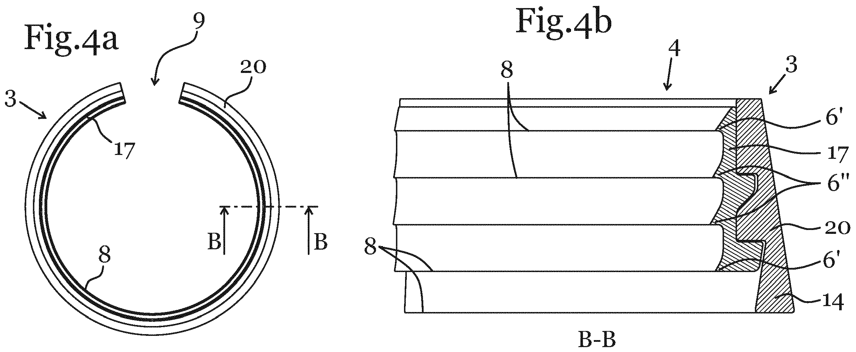

Fig. 4a bis 4b zeigen ein weiteres erfindungsgemäßes Ausführungsbeispiel, bei dem der Klemmring 3 mehrteilig ausgeführt ist und einen außenliegenden Trägerring 20, sowie einen innenliegenden Schneideinsatz 17 umfasst. Der Trägerring 20 ist vorzugsweise aus Kunststoff, und der Schneideinsatz 17 aus Metall ausgeführt. Wiederum ist der Klemmring 3 als unterbrochener Ring mit einem Stauchraum 9 ausgeführt. Im Schnitt B-B in Fig. 4b ist gezeigt, dass der metallische Schneideinsatz 17 formschlüssig über Eingriffselemente mit dem Trägerring 20 verbunden ist und über Zahnrillen 8 verfügt, welche die erfindungsgemäßen Rückhalteelemente 6, 6', 6" bilden. Wiederum verfügt der Klemmring 3 an seiner der Einschuböffnung 4 entgegengesetzten Öffnung über einen schwalbenschwanzförmigen Funktionssteg 14.

Die Erfindung beschränkt sich nicht auf die dargestellten Ausführungsbeispiele, sondern umfasst sämtliche Vorrichtungen im Rahmen der nachfolgenden Schutzansprüche.

### Bezugszeichenliste

- 1: Rohrarmatur
- 2: Rohr
- 3: Klemmring
- 4: Einschuböffnung
- 5: Außenfläche
- 6: Rückhalteelemente
- 6': Außenliegende Rückhalteelemente
- 6": Mittig liegende Rückhalteelemente
- 7: Zahn
- 8: Zahnrille
- 9: Stauchraum
- 10: Eingriffskurve
- 11: Spannelement
- 12: Federelement
- 13: Zahnkreis
- 14: Funktionssteg
- 15: Druckelement
- 16: Basis
- 17: Schneideinsatz
- 18: Gehäuse
- 20: Trägerring
- 25: Einführrundung

## Patentansprüche

1. Vorrichtung zur Sicherung eines, in einer Rohrarmatur (1) angeordneten Rohres (2) gegen die Einwirkung axialer Kräfte, umfassend ein Druckelement (15) und einen einteiligen oder mehrteiligen, vorzugsweise unterbrochenen und in seinem Umfang durch ein Spannelement (11) zusammendrückbaren Klemmring (3), umfassend
i. eine Einschuböffnung (4) zum Einführen des Rohres (2),
ii. eine sich ausgehend von der Einschuböffnung (4) zumindest partiell, vorzugsweise konisch erweiternde Außenfläche (5), sowie
iii. am inneren Umfang angeordneten Rückhalteelemente (6, 6', 6") zum Eingriff in die äußere Oberfläche des Rohres (2),
wobei die Rückhalteelemente (6, 6', 6") unterschiedliche Höhen aufweisen, **dadurch gekennzeichnet, dass** der Klemmring (3) einen radial umlaufenden Funktionssteg (14) mit konischem oder schwalbenschwanzförmigem Querschnitt umfasst, der als Anschlag dient und die Eingriffstiefe der Rückhalteelemente (6, 6', 6") in das Rohr (2) über eine Verbindung mit dem Druckelement (15), beispielsweise einer Druckhülse, begrenzt.

2. Vorrichtung nach Anspruch 1, **dadurch gekennzeichnet, dass** entlang einer Axialrichtung des Klemmrings (3) die außenliegenden Rückhalteelemente (6') eine geringere Erstreckung in Richtung des Mittelpunkts des Klemmrings (3) aufweisen als die mittig liegenden Rückhalteelemente (6").

3. Vorrichtung nach Anspruch 1, **dadurch gekennzeichnet, dass** entlang einer Axialrichtung des Klemmrings (3) die mittig liegenden Rückhalteelemente (6') eine geringere Erstreckung in Richtung des Mittelpunkts des Klemmrings (3) aufweisen als die außenliegenden Rückhalteelemente (6").

4. Vorrichtung nach Anspruch 2 oder 3, **dadurch gekennzeichnet, dass**, in einem Schnitt des Klemmrings (3) entlang einer Schnittebene die Spitzen der Rückhalteelemente (6, 6', 6") eine in Richtung des Mittelpunkts des Klemmrings (3) konkav oder konvex gekrümmte Eingriffskurve (10) bilden.

5. Vorrichtung nach einem der vorhergehenden Ansprüche, **dadurch gekennzeichnet, dass** die Rückhalteelemente (6, 6', 6") Zähne (7) mit tangential verlaufender Schneide umfassen.

6. Vorrichtung nach einem der vorhergehenden Ansprüche, **dadurch gekennzeichnet, dass** die Rückhalteelemente (6, 6', 6") zumindest eine im Wesentlichen umlaufende Zahnrille (8) umfassen, die vorzugsweise im Bereich gegenüber der Einschuböffnung (4) des Klemmrings (3) angeordnet ist.

7. Vorrichtung nach einem der vorhergehenden Ansprüche, **dadurch gekennzeichnet, dass** die Rückhalteelemente (6, 6', 6") tangential versetzt angeordnet sind.

8. Vorrichtung nach einem der Ansprüche 5 bis 7, **dadurch gekennzeichnet, dass** die Zähne (7) in mehreren axial versetzten Zahnkreisen (13), vorzugsweise in Kombination mit zumindest einer im Wesentlichen radial umlaufenden Zahnrille (8), angeordnet sind, wobei die Zähne (7) benachbarter Zahnkreise (13) vorzugsweise zueinander tangential versetzt angeordnet sind.

9. Vorrichtung nach den Ansprüchen 5 bis 8, **dadurch gekennzeichnet, dass** die Zähne (7) an zumindest einer Basis (16) eine Verstärkung, beispielsweise eine Materialverstärkung aufweisen.

10. Vorrichtung nach einem der vorhergehenden Ansprüche, **dadurch gekennzeichnet, dass** der Klemmring (3) mehrteilig ausgeführt ist und einen außenliegenden Trägerring (20) aus Kunststoff sowie zumindest einen innenliegenden, mit Rückhalteelementen, vorzugsweise Zahnrillen, versehenen Schneideinsatz (17) aus Metall umfasst.

11. Vorrichtung nach einem der vorhergehenden Ansprüche, **dadurch gekennzeichnet, dass** der unterbrochene Klemmring (3) einen Stauchraum (9) aufweist, der sich ausgehend von der Einschuböffnung (4) erweiternd, insbesondere zumindest partiell keilförmig auseinanderlaufend, ausgeführt ist.

12. Vorrichtung nach einem der vorhergehenden Ansprüche, **dadurch gekennzeichnet, dass** am Klemmring (3) an der Außenfläche (5) zumindest ein nach außen abstehendes Federelement (12), insbesondere zumindest eine Federlasche, vorgesehen ist, und vorzugsweise vier um 90 Grad versetzte Federelemente (12) vorgesehen sind.

13. Vorrichtung nach Anspruch 12, **dadurch gekennzeichnet, dass** die Federelemente (12) derart ausgeführt sind, dass sie im montierten Zustand gegen die Innenfläche des Spannelements (11) drücken und somit die Symmetrieachse des Klemmrings (3) im Wesentlichen koinzident zur Symmetrieachse des Spannelements (11) ausrichten.

14. Vorrichtung nach einem der vorhergehenden Ansprüche, **dadurch gekennzeichnet, dass** die Außenfläche (5) eine konkave oder eine konvexe Form aufweist.

## Claims

1. A device for securing a pipe (2) arranged in a pipe fitting (1) against the influence of axial forces, comprising a pressure element (15) and a one-piece or multi-piece clamping ring (3), which is preferably interrupted and can be compressed in terms of the circumference thereof by means of a clamping element (11), comprising
i. an insertion opening (4) for introducing the pipe (2),
ii. an outer surface (5), at least partially, preferably conically expanding, starting from the insertion opening (4), and
iii. retaining elements (6, 6', 6") arranged on the inner circumference, for engagement into the outer surface of the pipe (2),
wherein the retaining elements (6, 6', 6") have different heights, **characterized in that** the clamping ring (3) comprises a radially circumferential functional web (14) with conical or dovetail-shaped cross section, which is used as a stop and delimits the depth of engagement of the retaining elements (6, 6', 6") into the pipe (2) by means of a connection to the pressure element (15), for example a pressure sleeve.

2. The device according to Claim 1, **characterized in that**, along an axial direction of the clamping ring (3), the external retaining elements (6') have a smaller extent in the direction of the central point of the clamping ring (3) than the centrally located retaining elements (6").

3. The device according to Claim 1, **characterized in that**, along an axial direction of the clamping ring (3), the centrally located retaining elements (6') have a smaller extent in the direction of the central point of the clamping ring (3) than the external retaining elements (6").

4. The device according to Claim 2 or 3, **characterized in that** in a section of the clamping ring (3) along a sectional plane, the tips of the retaining elements (6, 6', 6") form a concavely or convexly curved engagement curve (10) in the direction of the central point of the clamping ring (3).

5. The device according to one of the preceding claims, **characterized in that** the retaining elements (6, 6', 6'') comprise teeth (7) with a tangentially running edge.

6. The device according to one of the preceding claims, **characterized in that** the retaining elements (6, 6', 6") comprise at least one substantially circumferential tooth groove (8), which is preferably arranged in the region opposite the insertion opening (4) of the clamping ring (3).

7. The device according to one of the preceding claims, **characterized in that** the retaining elements (6, 6', 6") are arranged in a tangentially offset manner.

8. The device according to one of Claims 5 to 7, **characterized in that** the teeth (7) are arranged in a plurality of axially offset tooth rings (13), preferably in combination with at least one substantially radially circumferential tooth ring (8), wherein the teeth (7) of adjacent tooth rings (13) are preferably arranged in a tangentially offset manner with respect to one another.

9. The device according to Claims 5 to 8, **characterized in that** the teeth (7) have a reinforcement, for example a material reinforcement, at least at one base (16) .

10. The device according to one of the preceding claims, **characterized in that** the clamping ring (3) is of multi-part design and comprises an external support ring (20) made from plastic and at least one internal cutting insert (17) made from metal and provided with retaining elements, preferably tooth grooves.

11. The device according to one of the preceding claims, **characterized in that** the interrupted clamping ring (3) has a buckle space (9), which is designed such that it expands starting from the insertion opening (4), particularly widens in an at least partially wedge-shaped manner.

12. The device according to one of the preceding claims, **characterized in that** at least one outwardly projecting spring element (12), particularly at least one spring shackle, is provided on the clamping ring (3) on the outer surface (5), and preferably four spring elements (12), which are offset by 90 degrees, are provided.

13. The device according to Claim 12, **characterized in that** the spring elements (12) are designed in such a manner that they press against the inner surface of the clamping element (11) in the mounted state and thus align the axis of symmetry of the clamping ring (3) substantially coincidentally to the axis of symmetry of the clamping element (11).

14. The device according to one of the preceding claims, **characterized in that** the outer surface (5) has a concave or a convex shape.

## Revendications

1. Dispositif destiné à prémunir un tuyau (2) disposé dans une tuyauterie (1) contre l'effet de forces axiales, comprenant un élément de pression (15) et un collier de serrage (3) d'un seul tenant ou en plusieurs parties, de préférence interrompu et pouvant être comprimé dans son pourtour par un élément de serrage (11), comprenant :
i. une ouverture d'insertion (4) pour introduire le tuyau (2),
ii. une face extérieure (5) s'élargissant au moins partiellement, de préférence de façon conique en partant de l'ouverture d'insertion (4), ainsi
iii. que des éléments de retenue (6, 6', 6") disposés sur le pourtour intérieur pour s'engager dans la surface extérieure du tuyau (2),
dans lequel les éléments de retenue (6, 6', 6") présentent différentes hauteurs, **caractérisé en ce que** le collier de serrage (3) comprend une bride fonctionnelle (14) périphérique radiale, avec une section transversale conique ou en queue d'aronde, qui sert de butée et délimite la profondeur d'engagement des éléments de retenue (6, 6', 6") dans le tuyau (2) par le biais d'une liaison avec l'élément de pression (15), par exemple un manchon de pression.

2. Dispositif selon la revendication 1, **caractérisé en ce que** le long d'un sens axial du collier de serrage (3), les éléments de retenue (6') placés à l'extérieur présentent un allongement moindre en direction du point médian du collier de serrage (3) que les éléments de retenue (6") placés au centre.

3. Dispositif selon la revendication 1, **caractérisé en ce que** le long d'un sens axial du collier de serrage (3), les éléments de retenue (6') centraux présentent un allongement moindre en direction du point médian du collier de serrage (3) que les éléments de retenue (6") placés à l'extérieur.

4. Dispositif selon la revendication 2 ou 3, **caractérisé en ce que** dans une coupe du collier de serrage (3) le long d'un plan de coupe, les pointes des éléments de retenue (6, 6', 6") forment une courbe d'engagement (10) concave ou convexe en direction du point médian du collier de serrage (3).

5. Dispositif selon l'une des revendications précédentes, **caractérisé en ce que** les éléments de retenue (6, 6', 6") comprennent des dents (7) au tranchant tangentiel.

6. Dispositif selon l'une des revendications précédentes, **caractérisé en ce que** les éléments de retenue (6, 6', 6") comprennent au moins un sillon de dent (8) essentiellement périphérique qui est disposé de préférence en vis-à-vis de l'ouverture d'insertion (4) du collier de serrage (3).

7. Dispositif selon l'une des revendications précédentes, **caractérisé en ce que** les éléments de retenue (6, 6', 6") sont décalés tangentiellement.

8. Dispositif selon l'une des revendications 5 à 7, **caractérisé en ce que** les dents (7) sont disposées dans plusieurs cercles de dents (13) décalés axialement, de préférence en combinaison avec au moins un sillon de dent (8) essentiellement radial, dans lequel les dents (7) de cercles de dents (13) voisins sont disposées en étant décalées tangentiellement entre elles.

9. Dispositif selon l'une des revendications 5 à 8, **caractérisé en ce que** les dents (7) présentent un renforcement au moins sur une base (16), par exemple un renforcement de matériau.

10. Dispositif selon l'une des revendications précédentes, **caractérisé en ce que** le collier de serrage (3) est conçu en plusieurs parties et comprend une bague de support (20) extérieure en plastique ainsi qu'au moins un insert de coupe (17) intérieur en métal, doté d'éléments de retenue, de préférence de sillons de dents.

11. Dispositif selon l'une des revendications précédentes, **caractérisé en ce que** le collier de serrage (3) interrompu présente un espace d'écrasement (9) qui est conçu s'élargissant en partant de l'ouverture d'insertion (4), en particulier s'écartant de façon au moins partiellement cunéiforme.

12. Dispositif selon l'une des revendications précédentes, **caractérisé en ce qu'**au moins un élément de ressort (12) en saillie vers l'extérieur, en particulier au moins une jumelle de ressort, est prévue sur la surface extérieure (5) sur le collier de serrage (3), et de préférence quatre éléments de ressort (12) décalés de 90 degrés sont prévus.

13. Dispositif selon la revendication 12, **caractérisé en ce que** les éléments de ressort (12) sont ainsi conçus que dans l'état monté, ils appuient contre la face intérieure de l'élément de serrage (11) et alignent ainsi l'axe de symétrie du collier de serrage (3) essentiellement en coïncidence avec l'axe de symétrie de l'élément de serrage (11).

14. Dispositif selon l'une des revendications précédentes, **caractérisé en ce que** la face extérieure (5) est concave ou convexe.
